# EUROPÄISCHE PATENTANMELDUNG

(11) **EP 1 239 181 A2**
(43) Veröffentlichungstag der Anmeldung: **11.09.2002**
(21) Anmeldenummer: 02004473.1
(22) Anmeldetag: 27.02.2002
(51) Int. Cl.: F16F 9/05

(54) **Luftfederbein**

(30) Priorität: 09.03.2001 DE 10111242
(71) Anmelder: Continental Aktiengesellschaft, 30165 Hannover (DE)
(72) Erfinder: Behmenburg, Christof, Dr., 31867 Lauenau (DE); Narberhaus, Stefan, Dr., 30826 Garbsen (DE); Wehaus, Holger, 30167 Hannover (DE)

(57) **Zusammenfassung**

Luftfederbein mit
- einer Luftfeder 2, die einen Rollbalg 6 aufweist, dessen oberes Ende an einem Deckel 10 und dessen unteres Ende unter Ausbildung einer unteren Abrollfalte 14 an einem Abrollkolben 16 befestigt ist und ein Luftvolumen umschließt, und
- einem Stoßdämpfer 4, der einen Zylinder enthält, und
- mindestens einem elastischen Element, mit dem zumindest über einen Teil des Federweges der Luftfeder 2 eine Verschwenkbarkeit der Luftfeder 2 zum Stoßdämpfer 4 erreicht wird, wobei
das oberere Ende des Rollbalges 6 unter Ausbildung einer oberen Abrollfalte 8 an dem Deckel 10 befestigt ist, wobei die obere Abrollfalte 8 zumindest über einen Teil des Federweges der Luftfeder 2 zumindest bereichsweise an dem Deckel 10 anliegt, so dass das elastische Element durch die obere Abrollfalte 8 gebildet wird.

## Beschreibung

Die Erfindung betrifft ein Luftfederbein mit
- einer Luftfeder, die einen Rollbalg aufweist, dessen oberes Ende an einem Deckel und dessen unteres Ende unter Ausbildung einer unteren Abrollfalte an einem Abrollkolben befestigt ist und ein Luftvolumen umschließt, und
- einen Stoßdämpfer, der einen Zylinder enthält, und
- mindestens einem elastischen Element, mit dem zumindest über einen Teil des Federweges der Luftfeder eine Verschwenkbarkeit der Luftfeder zum Stoßdämpfer erreicht wird.
Ein derartiges Federbein wird zwischen dem Fahrzeugaufbau und dem Rad eines Kraftfahrzeuges angeordnet, um das Rad gegenüber dem Fahrzeugaufbau federnd zu lagern (diese Funktion wird von der Luftfeder übernommen) und die Schwingungen des Rades bzw. des Fahrzeugaufbaus zu dämpfen (diese Funktion wird von dem Stoßdämpfer übernommen). Während des Federns des Rades wird das untere Ende, an dem das Luftfederbein befestigt ist, gegenüber dem oberen Ende, an dem das Luftfederbein befestigt ist, verschwenkt. Da die Kolbenstange des Stoßdämpfers am oberen Ende der Luftfeder und der Zylinder des Stoßdämpfers am unteren Ende des Luftfederbeines befestigt ist, kann dies dazu führen, dass auch die Kolbenstange gegenüber dem Zylinder des Stoßdämpfers verschwenkt wird. Infolgedessen kann sich der Kolben, der an der Kolbenstange befestigt ist, innerhalb des Zylinders des Stoßdämpfers verkanten, was zu einer unerwünschten Reibungserhöhung innerhalb des Stoßdämpfers führen würde. Dieses Problem wird bei modernen Luftfederbeinen durch ein elastisches Element gelöst, das eine Verschwenkbarkeit der Luftfeder zum Stoßdämpfer und infolgedessen eine Verschwenkbarkeit der Kolbenstange zum Zylinder des Stoßdämpfers ermöglicht. Auf Grund dieser

Verschwenkbarkeit ist gewährleistet, dass sich die Kolbenstange und der Zylinder des Stoßdämpfers immer auf einer Achse befinden und somit einer Verkantung des Kolbens im Zylinder vorgebeugt ist.

Ein Luftfederbein der eingangs genannten Art, das ein solches elastisches Element aufweist, ist z.B. aus der DE 195 08 980 C1 bekannt. Bei dem aus dieser Druckschrift bekannten Luftfederbein weist der Zylinder des Stoßdämpfers einen flanschartigen Kragen auf, auf dem das elastische Element in Form eines elastischen Ringes angeordnet ist. Der Abrollkolben der Luftfeder endet in einem flanschartigen Vorsprung und stützt sich mit diesem auf dem elastischen Ring ab. Der elastische Ring ermöglicht eine Taumelbeweglichkeit des Abrollkolbens der Luftfeder zu dem Zylinder des Stoßdämpfers und infolgedessen eine Verschwenkbarkeit der Luftfeder gegenüber dem Stoßdämpfer. Dadurch ist einer Verkantung des Kolbens in dem Zylinder des Stoßdämpfers vorgebeugt. Es ist jedoch festzustellen, dass der Abrollkolben der Luftfeder an einem tiefen Punkt des Zylinders des Stoßdämpfers angreifen muss, um eine ausreichend große Verschwenkbarkeit der Luftfeder gegenüber dem Stoßdämpfer zu gewährleisten. Da der Abrollkolben der Luftfeder den Stoßdämpfer umfasst, benötigt das aus der DE 195 08 980 C1 bekannte Luftfederbein auch an seinem unteren Ende einen großen Bauraum, der in modernen Kraftfahrzeugen nicht immer zur Verfügung steht.

Der Erfindung liegt die Aufgabe zu Grunde, ein Luftfederbein zu schaffen, das ein elastisches Element enthält, das eine Verschwenkbarkeit der Luftfeder zum Stoßdämpfer ermöglicht und das an seinem unteren Ende einen geringen Bauraum benötigt.

Gemäß den kennzeichnenden Merkmalen des Anspruchs 1 wird die Aufgabe dadurch gelöst, dass das obere Ende des Rollbalges unter Ausbildung einer oberen Abrollfalte an dem Deckel befestigt ist, wobei die obere Abrollfalte zumindest über einen Teil des Federweges der Luftfeder an den Deckel anliegt, so dass ein elastisches Element durch die obere Abrollfalte gebildet wird.

Die druckwirksame Fläche der oberen Abrollfalte wird zumindest über einen Teil des Federweges der Luftfeder kleiner ausgebildet als die druckwirksame Fläche der unteren Abrollfalte, um zu erreichen, dass die obere Abrollfalte zumindest über einen Teil des Federweges an dem Deckel anliegt. Neben dem elastischen Element in Form der oberen Abrollfalte kann das Luftfederbein weitere elastische Elemente enthalten, die eine Verschwenkung der Luftfeder gegenüber dem Stoßdämpfer unterstützen.

Aus der DE-OS 20 63 448 ist ein Luftfederbein bekannt, bei dem das obere Ende des Rollbalges an einem Federteller anliegt, um einen luftdichten Abschluss der Luftfeder an ihrem oberen Ende zu gewährleisten. Eine Verschwenkbarkeit der Luftfeder zum Stoßdämpfer soll durch die besondere Ausgestaltung des oberen Endes der Luftfeder nicht gewährleistet werden. Darüber hinaus ist aus der DE 198 42 733 A1 eine Luftfeder bekannt mit einem Rollbalg, dessen unteres Ende unter Ausbildung einer unteren Abrollfalte an einem Abrollkolben und dessen oberes Ende unter Ausbildung einer oberen Abrollfalte an dem Deckel der Luftfeder befestig ist. Es ist jedoch dort nicht beschrieben, dass die Luftfeder durch einen Stoßdämpfer zu einem Luftfederbein ergänzt wird. Dementsprechend übernimmt die obere Abrollfalte bei der aus dieser Druckschrift bekannten Luftfeder eine andere Funktion, nämlich die Funktion, in Kombination mit einem Rollfaltenlager die bei der Federbewegung der Luftfeder entstehenden Walkkräfte elastisch abzustützen.

Der mit der Erfindung erzielte Vorteil ist insbesondere darin zu sehen, dass die obere Abrollfalte einer Verschwenkung der Luftfeder gegenüber dem Stoßdämpfer des Luftfederbeines nur einen geringen Widerstand entgegensetzt, so dass eine verspannungsfreie Verschwenkung der Luftfeder sichergestellt ist. Ein weiterer Vorteil der Erfindung ist darin zu sehen, dass der Abrollkolben der Luftfeder weit oberhalb des unteren Endes des Luftfederbeines enden kann, da die Verschwenkbarkeit der Luftfeder gegenüber dem Stoßdämpfer mit Hilfe der oberen Abrollfalte erzeugt wird. Aus diesem Grunde benötigt das Luftfederbein im unteren Bereich nur einen geringen Bauraum.

Gemäß einer Weiterbildung der Erfindung nach Anspruch 2 ist zumindest über einen Teil des Federweges der Luftfeder der Durchmesser des Teiles des Deckels, auf dem die obere Abrollfalte abrollt, kleiner als der Durchmesser des Teiles des Abrollkolbens, auf dem die untere Abrollfalte abrollt. Der Vorteil dieser Weiterbildung ist darin zu sehen, dass durch eine derartige Ausgestaltung des Deckels und des Abrollkolbens der Luftfeder auf einfache Art und Weise sichergestellt werden kann, dass die obere Abrollfalte über einen Teil des Federweges der Luftfeder an dem Deckel der Luftfeder anliegt.

Gemäß einer Weiterbildung der Erfindung nach Anspruch 3 enthält der Deckel der Luftfeder zum Stoßdämpfer mindestens eine Aussparung, in der die obere Abrollfalte liegt. Vorzugsweise ist die Kontur der Aussparung bzw. der Aussparungen an die Kontur der oberen Abrollfalte angepasst. Der Vorteil dieser Weiterbildung ist darin zu sehen, dass sich die obere Abrollfalte des Rollbalges in diesen Aussparungen ohne Verformung bewegen kann, wenn die Luftfeder in der Verschwenkungsrichtung zum Stoßdämpfer verschwenkt wird.

Gemäß einer Weiterbildung der Erfindung nach Anspruch 4 ist das obere Ende des Rollbalges mit einem Klemmring an dem Deckel befestigt. Der Vorteil dieser Weiterbildung ist darin zu sehen, dass eine Befestigung mit einem Klemmring einfach möglich ist. Das untere Ende des Rollbalges kann ebenfalls mit einem Klemmring befestigt werden.

Gemäß einer Weiterbildung der Erfindung nach Anspruch 5 erfolgt die Befestigung derart, dass der Klemmring von dem oberen Ende des Rollbalges umschlungen wird. Der Vorteil dieser Weiterbildung ist darin zu sehen, dass die umschlingende Klemmung im oberen Bereich des Rollbalges zu einer Entlastung der Klemmverbindung führt, weil eine radial nach außen gerichtete Kraft (die durch den Luftdruck in der Luftfeder zu Stande kommt) die Klemmverbindung nicht belatet, sondern nur "versucht", die obere Abrollfalte von dem Klemmring nach radial außen "abzuheben". Das untere Ende des Rollbalges kann ebenfalls mit einem Klemmring an dem Abrollkolben derart befestigt werden, dass der Klemmring von dem unteren Ende des Rollbalges umschlungen wird. Hierdurch wird der gleiche Vorteil erreicht, wie bei dem oberen Ende des Rollbalges.

Gemäß einer Weiterbildung der Erfindung nach Anspruch 6 wird der Rollbalg zumindest bereichsweise von einer Außenführung umfasst. Der Vorteil dieser Weiterbildung ist darin zu sehen, dass die Außenführung radiale Kräfte, die auf den Rollbalg wirken, aufnehmen kann und der Rollbalg aus diesem Grunde dünn ausgebildet werden kann. Durch eine dünnwandige Ausbildung des Rollbalges wird ein guter Federungskomfort der Luftfeder erzielt, da diese dann bei kleinen Schwingungsamplituden keine Neigung zur Verhärtung aufweist. Vorzugsweise ist die Außenführung zylindrisch umfasst, da eine zylindrische Außenführung einfach herstellbar ist.

Gemäß einer Weiterbildung der Erfindung nach Anspruch 7 weist die Luftfeder einen Abrollkolben auf, der sich auf dem Zylinder des Stoßdämpfers abstützt. Der Vorteil dieser Weiterbildung ist darin zu sehen, dass die Kontur des Abrollkolbens direkt an die gewünschte Ausbildung der Abrollfalte der Luftfeder angepasst werden kann und dass die Luftfeder komplett und unabhängig von dem Stoßdämpfer gefertigt werden kann. Ein weiterer Vorteil dieser Weiterbildung ist darin zu sehen, dass sich der Abrollkolben der Luftfeder taumelbeweglich auf dem Zylinder des Stoßdämpfes abstützen kann, so dass auch in diesem Bereich eine zusätzliche Verschwenkbarkeit der Luftfeder zum Stoßdämpfer gegeben ist.

Gemäß einer Weiterbildung der Erfindung nach Anspruch 8 ist die untere Abrollfalte der Luftfeder an dem Zylinder des Stoßdämpfers befestigt, wobei der Zylinder zumindest bereichsweise als Abrollkolben für den Rollbalg der Luftfeder genutzt wird. Der Vorteil dieser Weiterbildung ist darin zu sehen, dass auf einen separaten Abrollkolben für die Luftfeder verzichtet werden kann und somit ein Bauteil eingespart wird.

Ausführungsbeispiele und weitere Vorteile der Erfindung werden im Zusammenhang mit den nachstehenden Figuren erläutert, darin zeigen:
- Fig. 1: ein Luftfederbein,
- Fig. 2: einen Schnitt entlang der in der Fig. 1 gezeigten Linie II/II,
- Fig. 3: ein Luftfederbein.

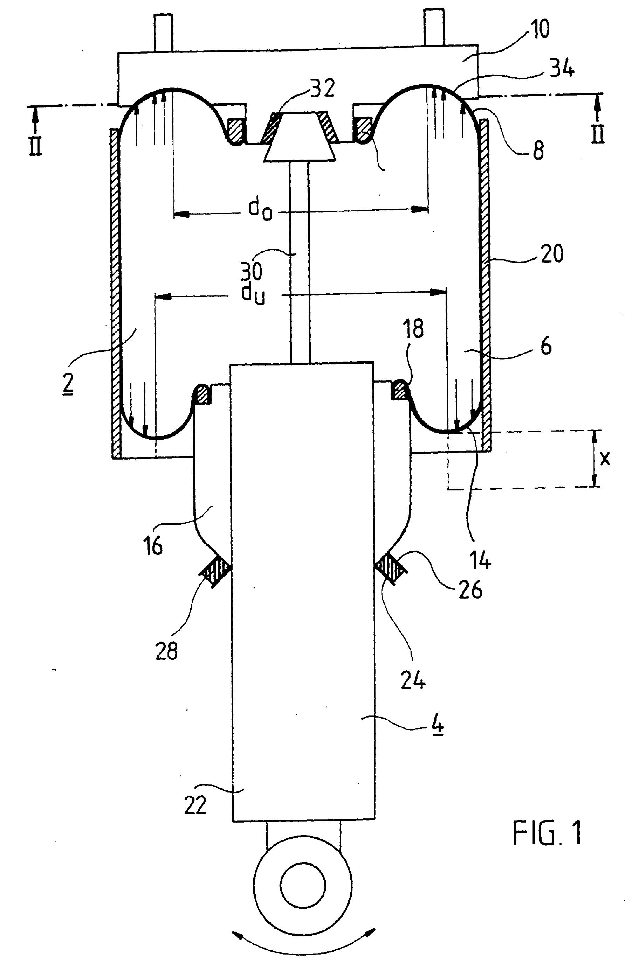

Figur 1 zeigt ein Luftfederbein mit einer Luftfeder 2 und einem Stoßdämpfer 4. Die Luftfeder 2 enthält einen Rollbalg 6, dessen oberes Ende unter Ausbildung einer oberen Abrollfalte 8 an den Deckel 10 der Luftfeder 2 befestigt ist. Die Befestigung erfolgt mit Hilfe eines Klemmringes 12. Hierbei erfolgt die Klemmung derart, dass der Rollbalg 6 zwischen dem Klemmring 12 und dem Deckel 10 vom Deckel 10 wegweist (also zum unteren Ende des Luftfederbeines hin orientiert ist). Nachdem der Rollbalg 6 den Bereich zwischen dem Klemmring 12 und dem Deckel 10 verlassen hat, wird er in Richtung des Deckels 10 in die obere Abrollfalte 8 überführt, so dass der Klemmring 12 von dem Rollbalg 6 umschlungen wird. Das untere Ende des Rollbalges 6 ist unter Ausbildung einer unteren Abrollfalte 14 an dem Abrollkolben 16 der Luftfeder 2 befestigt. Die Befestigung erfolgt mit Hilfe eines Klemmringes 18, der genau wie der Klemmring 14 von der Rollbalg 6 umschlungen wird. Der Rollbalg 6 der Luftfeder 2 umschließt ein mit Druckluft befülltes Luftvolumen und ist von einer zylinderförmigen Außenführung 20 umfasst. Die Außenführung 20 kann aus Metall oder Kunststoff bestehen und verhindert eine zu starke radiale Ausdehnung des Rollbalges 6. Sie kann beispielsweise über einen Reibschluss an dem Rollbalg 6 befestigt sein.

Ein Anliegen der oberen Abrollfalte 8 an dem Deckel 10 der Luftfeder 2 ist dadurch gewährleistet, dass der druckwirksame Durchmesser dₒ der oberen Abrollfalte 8 kleiner ist als der druckwirksame Durchmesser dᵤ der unteren Abrollfalte 14. (Dadurch wirkt der Luftdruck in der Luftfeder 2 bei der oberen Abrollfalte 8 auf eine größere Fläche 8 als bei der unteren Abrollfalte 14; hierbei ist zu berücksichtigen, dass nur die außerhalb der druckwirksamen Flächen liegenden Fläche einen Beitrag leistet. Infolgedessen ist die Kraft, die auf die obere Abrollfalte 8 wirkt und nach oben gerichtet ist, größer als diejenige Kraft, die auf die untere Abrollfalte 14 wirkt und nach unten gerichtet ist, so dass die obere Abrollfalte 8 zur Anlage an den Deckel 10 der Luftfeder 2 kommt.) Bei einem bestimmten Federzustand des Luftfederbeines 2 ist die druckwirksame Fläche dₒ kleiner ist als die druckwirksame Fläche dᵤ,wenn bei diesem Federungszustand der Durchmesser des Deckels 10, auf dem die obere Abrollfalte 8 abrollt, kleiner ist als der Durchmesser des Teiles des Abrollkolbens 16, auf dem die untere Abrollfalte 14 abrollt. Bei dem in der Figur 1 gezeigten Luftfederbein ist dies für den gesamten Federweg x der Luftfeder 2 der Fall, so dass bei einem Eintauchen des Abrollkolbens 16 in das Luftvolumen der Luftfeder 2 über den gesamten Federweg x gewährleistet ist, dass die obere Abrollfalte 8 an dem Deckel 10 anliegt.

Der Abrollkolben 16 der Luftfeder 2 stützt sich auf dem Zylinder 22 des Stoßdämpfers 4 ab. Dazu kann der Zylinder 22 beispielsweise einen flanschartigen Vorsprung 24 aufweisen, auf dem sich das flanschartige Ende 26 des Abrollkolbens 16 abstützt. Zwischen dem flanschartigen Vorsprung 24 des Stoßdämpfers 4 und dem flanschartigen Ende 26 des Abrollkolbens 16 ist ein Ring 28 aus elastomerem Material angeordnet. Es ist ebenfalls möglich, den Abrollkolben 16 anderweitig mit dem Zylinder 22 des Stoßdämpfers 4, z.B. starr, zu verbinden. In den Zylinder 22 des Stoßdämpfers 4 ist eine Kolbenstange 30 eingeführt, an der ein (nicht gezeigter) Kolben befestigt ist. Die Kolbenstange 30 steht über ein Elastomerlager 32 mit dem Deckel 10 der Luftfeder 2 in Verbindung. Bei einer Verschwenkung des Stoßdämpfers 4 gegenüber der Luftfeder 2 in Richtung des in der Figur 1 eingezeichneten Pfeiles, der unterhalb des Luftfederbeines eingezeichnet ist, wirkt die obere Abrollfalte 8 der Luftfeder 2 wie ein elastisches Lager, das dieser Verschwenkung des Stoßdämpfers 4 keinen Widerstand entgegensetzt. Während der Verschwenkung bewegt sich die obere Abrollfalte 8 in den Aussparungen 34 des Deckels 10 hin und her. Durch die Verschwenkbarkeit ist sichergestellt, dass die Kolbenstange 30 und der Zylinder 22 immer entlang einer Achse ausgerichtet sind.

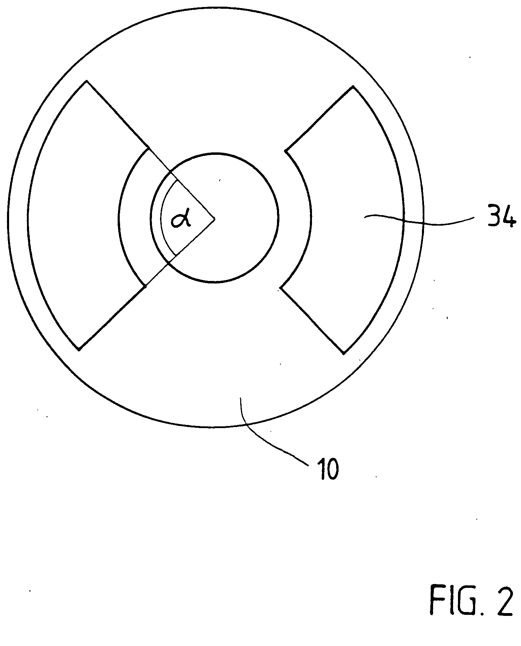

Figur 2 zeigt einen Schnitt durch das Luftfederbein entlang der in der Figur 1 eingezeichneten Linie II/II, wobei zur besseren Übersicht der Rollbalg 6 nicht eingezeichnet ist. Der Figur 2 ist zu entnehmen, dass die Aussparungen 34 in dem Deckel 10 sich jeweils über einen Winkel α erstrecken, der zwischen 60 ° und 90 ° liegt.

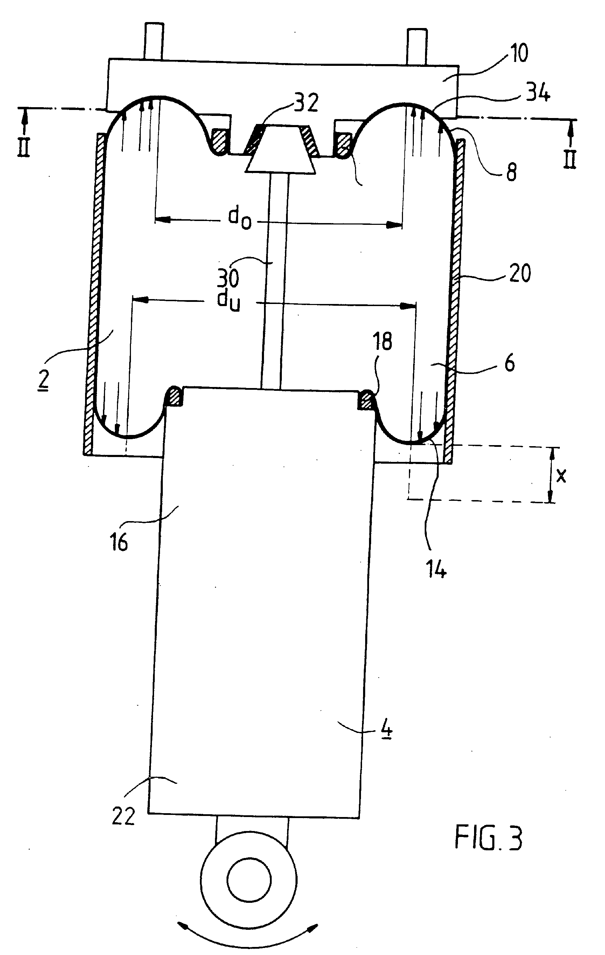

Figur 3 zeigt ein Luftfederbein, das weitgehend genauso aufgebaut ist, wie das in der Fig. 1 gezeigte Luftfederbein. Der einzige Unterschied ist darin zu sehen, dass die untere Abrollfalte 14 direkt an dem Zylinder 22 des Stoßdämpfers 4 befestigt ist und dass der obere Teil des Zylinders 22 direkt als Abrollkolben für den Rollbalg 6 der Luftfeder 2 genutzt wird.

### Bezugszeichenliste

### (ist Teil der Beschreibung)

- 2: Luftfeder
- 4: Stoßdämpfer
- 6: Rollbalg
- 8: obere Abrollfalte
- 10: Deckel
- 12: Klemmring
- 14: untere Abrollfalte
- 16: Abrollkolben
- 18: Klemmring
- 20: Außenführung
- 22: Zylinder
- 24: flanschartiger Vorsprung
- 26: flanschartiges Ende
- 28: Ring
- 30: Kolbenstange
- 32: Elastomerlager
- 34: Aussparung

## Patentansprüche

1. Luftfederbein mit
- einer Luftfeder (2), die einen Rollbalg (6) aufweist, dessen oberes Ende an einem Deckel (10) und dessen unteres Ende unter Ausbildung einer unteren Abrollfalte (14) an einem Abrollkolben (16) befestigt ist und ein Luftvolumen umschließt, und
- einem Stoßdämpfer (4), der einen Zylinder (22) enthält, und
- mindestens einem elastischen Element, mit dem zumindest über einen Teil des Federweges der Luftfeder (2) eine Verschwenkbarkeit der Luftfeder (2) zum Stoßdämpfer (4) erreicht wird
**dadurch gekennzeichnet, dass**
das oberere Ende des Rollbalges (6) unter Ausbildung einer oberen Abrollfalte (8) an dem Deckel (10) befestigt ist, wobei die obere Abrollfalte (8) zumindest über einen Teil des Federweges der Luftfeder (2) zumindest bereichsweise an dem Deckel (10) anliegt, so dass das elastische Element durch die obere Abrollfalte (8) gebildet wird.

2. Luftfederbein nach Anspruch 1, **dadurch gekennzeichnet, dass** zumindest über einen Teil des Federweges der Luftfeder (2) der Durchmesser des Teiles des Deckels (10), auf dem die obere Abrollfalte (8) abrollt, kleiner ist als der Durchmesser des Teiles des Abrollkolbens (16), auf dem die untere Abrollfalte (14) abrollt.

3. Luftfederbein nach einem der Ansprüche 1 bis 2, **dadurch gekennzeichnet, dass** der Deckel (10) der Luftfeder (2) mindestens eine Aussparung (34) enthält, in der die obere Abrollfalte (8) liegt.

4. Luftfederbein nach einem der Ansprüche 1 bis 3, **dadurch gekennzeichnet, dass** das obere Ende des Rollbalges (6) mit einem Klemmring (12) an dem Deckel (10) befestigt ist.

5. Luftfederbein nach Anspruch 4, **dadurch gekennzeichnet, dass** die Befestigung derart erfolgt, dass der Klemmring (12) von dem oberen Ende des Rollbalges (6) umschlungen wird.

6. Luftfederbein nach einem der Ansprüche 1 bis 5, **dadurch gekennzeichnet, dass** der Rollbalg (6) zumindest bereichsweise von einer Außenführung (20) umfasst wird.

7. Luftfederbein nach einem der Ansprüche 1 bis 6, **dadurch gekennzeichnet, dass** die Luftfeder (2) einen Abrollkolben (16) aufweist, der sich auf dem Zylinder (22) des Stoßdämpfers (4) abstützt.

8. Luftfederbein nach einem der Ansprüche 1 bis 6, **dadurch gekennzeichnet, dass** die untere Abrollfalte (14) an dem Zylinder (22) des Stoßdämpfers (4) befestigt ist und dass der Zylinder (22) zumindest bereichsweise als Abrollkolben genutzt wird.
